# EUROPÄISCHE PATENTSCHRIFT

(11) **EP 3 508 397 B1**
(45) Veröffentlichungstag und Bekanntmachung des Hinweises auf die Patenterteilung: **22.06.2022**
(21) Anmeldenummer: 18209784.0
(22) Anmeldetag: 03.12.2018
(51) Int. Cl.: B62D 1/22

(54) **VORRICHTUNG ZUM LENKEN EINES KRAFTFAHRZEUGS UND ZWISCHENGETRIEBE HIERFÜR**
DEVICE FOR STEERING A MOTOR VEHICLE AND INTERMEDIATE TRANSMISSION FOR SAME
DISPOSITIF DE DIRECTION D'UN VÉHICULE AUTOMOBILE ET TRANSMISSION INTERMÉDIAIRE CORRESPONDANTE

(30) Priorität: 29.12.2017 AT 5042017
(43) Veröffentlichungstag der Anmeldung: 10.07.2019
(73) Patentinhaber: MAN Truck & Bus SE, 80995 München (DE)
(72) Erfinder: Griessler, Matthias, 3100 St. Pölten (AT); Höllwarth, Christian, 4452 Ternberg (AT); Wieser, Tobias, 4523 Neuzeug (AT); Keppel, Manfred, 7540 Güssing (AT); Reihser, Heinz, 4331 Naarn (AT)
(74) Vertreter: v. Bezold & Partner Patentanwälte - PartG mbB

(56) Entgegenhaltungen:
- EP-A1- 3 315 382
- GB-A- 204 340
- US-A- 3 414 286

## Beschreibung

Die Erfindung betrifft eine Vorrichtung zum Lenken eines Kraftfahrzeugs, insbesondere Nutzfahrzeugs, mit einer, insbesondere fahrerseitigen, Hauptlenkeinrichtung und einer, insbesondere beifahrerseitigen, Zusatzlenkeinrichtung.

Für den Fahrschulbetrieb können Lenkvorrichtungen eines Kraftfahrzeugs eine fahrerseitige Hauptlenkeinrichtung und eine beifahrerseitige Zusatzlenkeinrichtung, die jeweils ein eigenes Lenkrad und einen eigenen Lenkungsstrang umfassen, aufweisen. Das Kraftfahrzeug kann somit sowohl mittels der Hauptlenkeinrichtung als auch mittels der Zusatzlenkeinrichtung gelenkt werden. Damit können beifahrerseitige Lenkeingriffe und Lenkkorrekturen ohne umständliches Umgreifen auf das Lenkrad des Fahrers vorgenommen werden, was insbesondere im Fahrschulbetrieb hilfreich ist und die Fahrsicherheit erhöht.

Die US 4,756,552 A offenbart ein Lenksystem, das von einem Paar von Lenkrädern gesteuert wird. Das Lenksystem weist auch erste und zweite Lenkradwelleneinrichtungen auf, die jeweils eines der Lenkräder tragen. Ein Radlenkmechanismus ist mechanisch mit der ersten und der zweiten Lenkradwelleneinrichtung verbunden.

Die US 3,814,204 A offenbart einen Doppellenkungsumwandlungsmechanismus, der zwei Getriebemittel verwendet, die durch eine ausziehbare Stange miteinander verbunden sind, die in einer schwenkbar gelagerten Kabine positioniert ist. Das erzeugte Lenkdrehmoment wird über eine Getriebeeinrichtung an die lenkbaren Räder geleitet. Die Getriebeeinrichtung ist verschiebbar und schwenkbar mit der Kabine verbunden, so dass die Kabine nach vorne geneigt werden kann.

Die US 4,921,066 A offenbart ein Doppelsteuerungsantriebssystem für ein Fahrzeug mit Verbrennungsmotor, das auf Rädern bewegbar ist und ein Paar von Lenksystemen, ein Paar von Bremssystemen und ein Paar von Beschleunigersystemen aufweist. Die Lenksysteme arbeiten miteinander zusammen.

Die EP 3 315 382 A1 offenbart ein Lenksystem für ein Kraftfahrzeug mit einer fahrerseitigen Lenkvorrichtung und einer beifahrerseitigen Lenkvorrichtung. Ein Lagerprofil zur kraftfahrzeugfesten Montage hält ein Lenkgetriebe, eine Lagerung einer flexiblen Wellenverbindung, eine Lagerung einer Drehmomentübertragungsvorrichtung und eine Drehrichtungsumkehreinrichtung.

Die US 3 414 286 A offenbart ein gattungsgemäßes Lenksystem mit einem Frontlenkrad und einem Hecklenkrad.

Der Erfindung liegt die Aufgabe zu Grunde, eine alternative und/oder verbesserte Vorrichtung zum Lenken eines Kraftfahrzeugs mit einer Hauptlenkeinrichtung und einer Zusatzlenkeinrichtung zu schaffen.

Die Aufgabe wird gelöst durch die Vorrichtung zum Lenken eines Kraftfahrzeugs gemäß dem unabhängigen Anspruch 1. Vorteilhafte Weiterbildungen sind in den abhängigen Ansprüchen und der Beschreibung angegeben.

Ein Zwischengetriebe ist für die Vorrichtung zum Lenken eines Kraftfahrzeugs, insbesondere Nutzfahrzeugs, mit einer, insbesondere fahrerseitigen, Hauptlenkeinrichtung und einer, insbesondere beifahrerseitigen, Zusatzlenkeinrichtung geeignet. Das Zwischengetriebe weist eine erste Antriebswelle, die trieblich mit einem Lenkungsstrang der Hauptlenkeinrichtung verbindbar ist, auf. Das Zwischengetriebe weist eine zweite Antriebswelle, die trieblich mit einem Lenkungsstrang der Zusatzlenkeinrichtung verbindbar ist, auf. Das Zwischengetriebe weist einen Kopplungsmechanismus, der zum wahlweisen Koppeln und Entkoppeln der ersten Antriebswelle und der zweiten Antriebswelle ausgebildet ist, auf. Das Zwischengetriebe weist ferner ein Gehäuse auf, in dem die erste Antriebswelle und die zweite Antriebswelle drehbar aufgenommen sind.

Die Integration des Zwischengetriebes in die Vorrichtung zum Lenken des Kraftfahrzeugs ermöglicht eine wahlweise Kopplung und Entkopplung der Zusatzlenkeinrichtung und der Hauptlenkeinrichtung. Damit kann, wenn gewünscht, das Kraftfahrzeug mittels der Zusatzlenkeinrichtung (mit-) gelenkt werden, wenn die erste Antriebswelle und die zweite Antriebswelle miteinander gekoppelt sind. Dies kann beispielsweise im Fahrschulbetrieb gewünscht sein. Das Zwischengetriebe kann das Drehmoment der Zusatzlenkeinrichtung formschlüssig in den Hauptlenkungsstrang einleiten. Alternativ kann, wenn gewünscht, das Kraftfahrzeug nur mittels der Hauptlenkeinrichtung gelenkt werden, wenn die erste Antriebswelle und die zweite Antriebswelle voneinander entkoppelt sind. Damit kann das Kraftfahrzeug neben den Fahrschulbetrieb auch gemäß dessen eigentlicher Bestimmung verwendet werden, bei der ein Lenkeingriff mittels der Zusatzlenkeinrichtung nicht möglich ist. Es ist bspw. auch möglich, ein als Linkslenker-Fahrzeug eingesetztes Fahrzeug, bei der die Hauptlenkeinrichtung auf der linken Seite des Kraftfahrzeugs ist, hilfsweise als Rechtslenker-Fahrzeug mittels der Zusatzlenkeinrichtung einzusetzen, und umgekehrt.

Insbesondere können die erste Antriebswelle und die zweite Antriebswelle im Wesentlichen parallele Wellenachsen aufweisen.

Insbesondere weist die erste Antriebswelle einen Wellenstumpf auf, der dazu ausgebildet ist, mit dem Lenkungsstrang der Hauptlenkeinrichtung, beispielsweise gelenkig, verbunden zu werden. Alternativ oder zusätzlich weist die zweite Antriebswelle einen Wellenstumpf auf, der dazu ausgebildet ist, mit dem Lenkungsstrang der Zusatzlenkeinrichtung, beispielsweis gelenkig, verbunden zu werden.

In einem besonders bevorzugten Ausführungsbeispiel ist das Gehäuse ein abgedichtetes und/oder geschlossenes Gehäuse,. Dies hat den Vorteil, dass einerseits kein Schmutz in das Zwischengetriebe eindringen und andererseits kein Schmiermittel aus dem Zwischengetriebe austreten kann.

Beispielsweise können die erste Antriebswelle und die zweite Antriebswelle jeweils beidseitig kugelgelagert sein.

Es ist möglich, dass auch der Kopplungsmechanismus in dem Gehäuse aufgenommen ist.

Das Gehäuse des Zwischengetriebes kann insbesondere ein Gehäuse sein, das nur für das Zwischengetriebe vorgesehen ist. D. h., das Zwischengetriebe kann ein eigenes Gehäuse aufweisen. Das eigene Gehäuse ermöglicht eine montagefreundliche Integration des Zwischengetriebes in die Vorrichtung zum Lenken des Kraftfahrzeugs. Insbesondere kann das Zwischengetriebe so in die Vorrichtung zum Lenken des Kraftfahrzeugs integriert werden, dass nur geringe Änderungen am Serien-Lenkungsstrang des Kraftfahrzeugs vorgenommen werden müssen, um das Kraftfahrzeug auf eine Doppellenkvorrichtung umzurüsten.

In einem Ausführungsbeispiel ist das Zwischengetriebe als ein, insbesondere einstufiges, Stirnradgetriebe ausgebildet und/oder weist eine Übersetzung von 1 auf. Damit findet keine Drehmomentübersetzung zwischen den Zahnrädern, insbesondere Stirnrädern, des Zwischengetriebes statt.

In einem weiteren Ausführungsbeispiel sind die Zusatzlenkeinrichtung und die Hauptlenkeinrichtung an entgegengesetzten Seiten des Zwischengetriebes trieblich mit dem Zwischengetriebe verbindbar.

Insbesondere ragen der Wellenstumpf der ersten Antriebswelle und der Wellenstumpf der zweiten Antriebswelle an entgegengesetzten Seiten des Gehäuses aus dem Gehäuse des Zwischengetriebes.

In einer Ausführungsform ist die erste Antriebswelle drehfest mit einem angetriebenen Zahnrad verbunden. Die zweite Antriebswelle ist drehfest mit einem treibenden Zahnrad verbunden. Der Kopplungsmechanismus ist zum wahlweisen Koppeln und Entkoppeln des treibenden Zahnrads und des angetriebenen Zahnrads ausgebildet. Das angetriebene Zahnrad und das treibende Zahnrad können miteinander kämmen.

Insbesondere kann das angetriebene Zahnrad drehfest und axial gesichert auf der ersten Antriebswelle angeordnet sein.

Insbesondere kann das treibende Zahnrad drehfest und axial verschiebbar auf der zweiten Antriebswelle angeordnet sein.

In einer weiteren Ausführungsform weist der Kopplungsmechanismus eine Schiebemuffe oder eine Kupplung, insbesondere eine Klauenkupplung, auf.

In einer Weiterbildung ist das treibende Zahnrad mit der Schiebemuffe verschiebbar, um in Eingriff mit und außer Eingriff von dem angetriebenen Zahnrad zu gelangen. Insbesondere kann das treibende Zahnrad an der Schiebemuffe befestigt sein. Beispielsweise können das treibende Zahnrad und die Schiebemuffe miteinander verschraubt sein.

In einer Weiterbildung ist die Schiebemuffe auf einem Keilwellenprofil der zweiten Antriebswelle verschiebbar. Alternativ oder zusätzlich ist die Schiebemuffe mittels einer Schaltgabel verschiebbar. Die Schaltgabel kann beispielsweise in eine Umfangsnut der Schiebemuffe eingreifen.

Bei einer Ausführungsvariante mit Kupplung, insbesondere Klauenkupplung, statt Schiebemuffe kann das treibende Zahnrad axial gesichert auf einer Antriebswelle vorgesehen sein. Das treibende Zahnrad kann ständig im Eingriff mit dem angetriebenen Zahnrad sein. Die Kupplung kann auf einer weiteren, koaxialen Antriebswelle (zum Beispiel der zweiten Antriebswelle) vorgesehen sein, um wahlweise in Eingriff mit und außer Eingriff von dem treibenden Zahnrad zu gelangen.

Nach der Erfindung weist das Zwischengetriebe ferner eine Führungseinrichtung, insbesondere aufweisend eine Führungsstange, mittels der der Kopplungsmechanismus geführt, insbesondere längsgeführt, ist, auf. Damit kann beispielsweise ein Verkanten des lungsmechanismus, insbesondere der Schaltgabel des Kopplungsmechanismus, beim Koppeln und Entkoppeln verhindert werden.

Insbesondere kann die Führungsstange in dem Gehäuse parallel zu den Wellenachsen der ersten Antriebswelle und der zweiten Antriebswelle befestigt sein.

Beispielsweise kann die Führungseinrichtung zur Längsführung des Kopplungsmechanismus parallel zu den Wellenachsen der ersten Antriebswelle und der zweiten Antriebswelle ausgebildet sein.

In einem weiteren Ausführungsbeispiel weist das Zwischengetriebe ferner eine Arretiereinrichtung, insbesondere aufweisend einen Sicherungsstift, mittels der der Kopplungsmechanismus in einer eingekoppelten Stellung und/oder einer ausgekoppelten Stellung arretierbar ist, auf. Die Arretierungseinrichtung ermöglicht, dass nicht ungewollt eine Kopplung oder Entkopplung des Kopplungsmechanismus durchgeführt wird. Stattdessen kann der Kopplungsmechanismus sicher in der eingekoppelten Stellung oder in der ausgekoppelten Stellung arretiert werden.

Insbesondere kann die Arretierungseinrichtung von außerhalb des Gehäuses des Zwischengetriebes zugänglich sein.

In einem weiteren Ausführungsbeispiel weist das Zwischengetriebe ferner eine Rasteinrichtung, insbesondere aufweisend einen in eine Umfangsnut einrastbaren federvorgespannten Rastkörper, mittels der der Kopplungsmechanismus in einer eingekoppelten Stellung und/oder einer ausgekoppelten Stellung einrastbar ist, auf. Damit kann eine ungewollte Verschiebung des Kopplungsmechanismus verhindert werden, wenn die Arretierungseinrichtung bereits gelöst ist. Zudem kann beispielsweise das treibende Zahnrad in der eingekoppelten Stellung gehalten werden, ohne einen schleifenden Kontakt zwischen der Schaltgabel und der Schaltmuffe zu erzeugen.

Beispielsweise können mehrere am Umfang der Schiebemuffe verteilte federvorgespannte Rastkörper in eine Umfangsnut des Keilwellenprofils einrasten. Insbesondere kann die Umfangsnut V-förmig ausgebildet sein.

Es ist auch möglich, dass der oder die federvorgespannten Rastkörper in der Antriebswelle vorgesehen sind und in eine beispielsweise V-förmige Umfangsnut der Schiebemuffe einrastbar sind.

In einer Ausführungsform weist das Zwischengetriebe ferner eine Betätigungseinrichtung, insbesondere aufweisend eine Betätigungsstange, mittels der der Kopplungsmechanismus manuell betätigbar ist, auf.

Insbesondere kann die Betätigungseinrichtung mit der Schaltgabel des Kopplungsmechanismus verbunden sein.

Beispielsweise kann ein Handgriff (Griffstück) der Betätigungseinrichtung von außerhalb des Gehäuses des Zwischengetriebes zugänglich sein.

Die Erfindung betrifft auch eine Vorrichtung zum Lenken eines Kraftfahrzeugs, insbesondere Nutzfahrzeugs. Die Vorrichtung weist die Hauptlenkeinrichtung, die Zusatzlenkeinrichtung und das Zwischengetriebe wie hierin offenbart auf. Der Lenkungsstrang der Hauptlenkeinrichtung ist trieblich (insbesondere direkt) mit der ersten Antriebswelle verbunden und der Lenkungsstrang der Zusatzlenkeinrichtung ist trieblich (insbesondere direkt) mit der zweiten Antriebswelle verbunden.

Insbesondere kann die Hauptlenkeinrichtung ein Lenkrad aufweisen, das antreibend mit dem Lenkungsstrang der Hauptlenkeinrichtung verbunden ist. Beispielsweise kann der Lenkungsstrang der Hauptlenkeinrichtung eine Lenk-Gelenkwelle aufweisen.

Insbesondere kann die Zusatzlenkeinrichtung ein Lenkrad aufweisen, das antreibend mit dem Lenkungsstrang der Zusatzlenkeinrichtung verbunden ist. Beispielsweise kann der Lenkungsstrang der Zusatzlenkeinrichtung eine Mehrzahl von Lenk-Gelenkwellen, Winkelgetrieben und/oder flexiblen Wellen aufweisen, die trieblich miteinander verbunden sein können.

In einem Ausführungsbeispiel weist die Vorrichtung ferner ein Lenkgetriebe (einen Radlenkmechanismus), insbesondere zum Wandeln einer eingehenden Drehbewegung in eine ausgehende Schiebebewegung, auf. Das Zwischengetriebe ist antreibend mit dem Lenkgetriebe verbunden.

Beispielsweise kann das Lenkgetriebe als Kugelumlauflenkgetriebe, Zahnstangenlenkgetriebe, Schneckenlenkgetriebe oder Schraubenspindellenkgetriebe ausgebildet sein.

In einer Weiterbildung sind das Gehäuse des Zwischengetriebes und ein Gehäuse des Lenkgetriebes lösbar und/oder in einer definierten Ausrichtung zueinander aneinander befestigt. Die starre Befestigung in der definierten Ausrichtung zueinander zwischen dem Gehäuse des Zwischengetriebes und dem Gehäuse des Lenkgetriebes verhindert Relativbewegungen zwischen den Antriebselementen des Zwischengetriebes und des Lenkgetriebes. Mittels der exakten Ausrichtung der Antriebselemente kann ein leichtgängiger Lauf über die Lebensdauer gewährleistet werden und es kommt zu keinen Verspannungen oder Beeinflussungen des Lenkungsstrangs der Hauptlenkeinrichtung. Die lösbare Anbringung ermöglicht eine Demontage des Zwischengetriebes beispielsweise zu Wartungszwecken. Zur Demontage kann beispielsweise der Lenkungsstrang der Hauptlenkeinrichtung und der Lenkungsstrang der Zusatzlenkeinrichtung von dem Zwischengetriebe sowie zusätzlich die Befestigung am Gehäuse des Lenkgetriebes gelöst werden.

Beispielsweise können das Gehäuse des Zwischengetriebes und das Gehäuse des Lenkgetriebes miteinander verschraubt sein.

Die Erfindung ist auch auf ein Kraftfahrzeug, insbesondere Nutzfahrzeug (zum Beispiel Lastkraftwagen oder Omnibus), mit einem Zwischengetriebe wie hierin offenbart oder einer Vorrichtung wie hierin offenbart gerichtet.

Es ist auch möglich, die Vorrichtung wie hierin offenbart für Personenkraftwagen, geländegängige Fahrzeuge usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer Vorrichtung zum Lenken eines Kraftfahrzeugs gemäß einem Ausführungsbeispiel;
- Figur 2: eine Perspektivansicht eines Zwischengetriebes und eines Lenkgetriebes der beispielhaften Vorrichtung zum Lenken des Kraftfahrzeugs;
- Figur 3: eine perspektivische Innenansicht des beispielhaften Zwischengetriebes; und
- Figur 4: einen Halbschnittansicht einer Antriebswelle des beispielhaften Zwischengetriebes.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

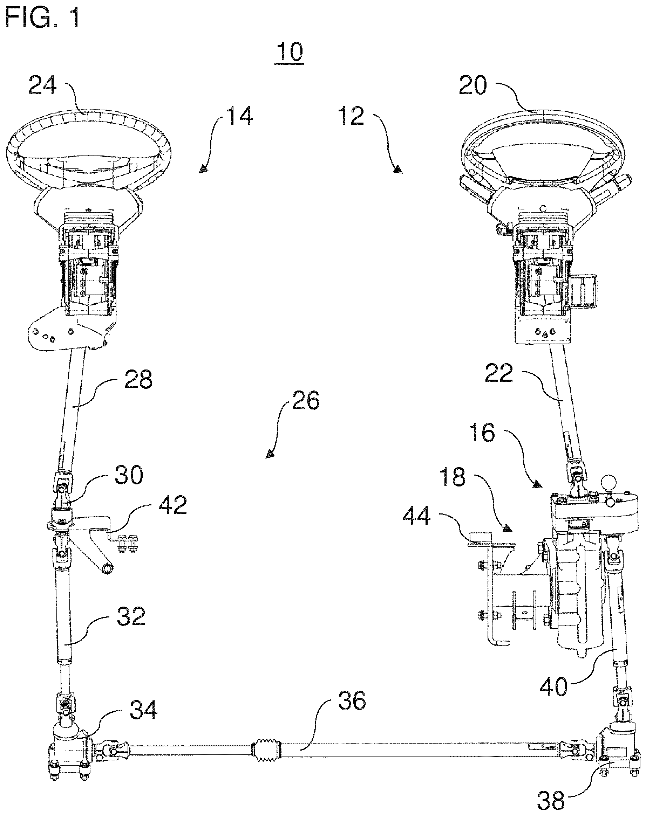

In Figur 1 ist eine Vorrichtung 10 zum Lenken eines Kraftfahrzeugs dargestellt. Das Kraftfahrzeug kann insbesondere ein Nutzfahrzeug, zum Beispiel ein Omnibus oder ein Lastkraftwagen, sein. Die Vorrichtung 10 kann beispielsweise für einen Fahrschulbetrieb des Kraftfahrzeugs genutzt werden.

Die Vorrichtung 10 weist eine Hauptlenkeinrichtung 12, eine Zusatzlenkeinrichtung 14, ein Zwischengetriebe 16 und ein Lenkgetriebe 18 auf.

Die Hauptlenkeinrichtung 12 dient als fahrerseitige Lenkeinrichtung des Kraftfahrzeugs. Die Hauptlenkeinrichtung 12 weist ein Lenkrad 20 und einen Lenkungsstrang 22 auf. Das Lenkrad 20 ist antreibend mit dem Lenkungsstrang 22 verbunden. Der Lenkungsstrang 22 ist antreibend mit dem Zwischengetriebe 16 verbunden. In der dargestellten Ausführungsform weist der Lenkungsstrang 22 eine Lenk-Gelenkwelle auf, die antreibend und gelenkig mit dem Zwischengetriebe 16 verbunden ist.

Die Zusatzlenkeinrichtung 14 dient als beifahrerseitige Lenkeinrichtung des Kraftfahrzeugs. Die Zusatzlenkeinrichtung 14 weist ein Lenkrad 24 und einen Lenkungsstrang 26 auf. Das Lenkrad 24 ist antreibend mit dem Lenkungsstrang 26 verbunden. Der Lenkungsstrang 26 weist eine Mehrzahl von miteinander verbundenen Lenk-Gelenkwellen und Winkelgetrieben auf. Es ist allerdings beispielsweise auch möglich, den Lenkungsstrang 26 mit einer oder mehreren flexiblen Wellen vorzusehen.

Im Einzelnen weist der Lenkungsstrang 26 eine erste Lenk-Gelenkwelle 28, eine Zwischenwelle 30, eine zweite Lenk-Gelenkwelle 32, ein erstes Winkelgetriebe 34, eine dritte Lenk-Gelenkwelle 36, ein zweites Winkelgetriebe 38 und eine vierte Lenk-Gelenkwelle 40 auf, die miteinander in der angegebenen Reihenfolge antreibend und jeweils gelenkig miteinander verbunden sind.

Die Zwischenwelle 30 ist drehbar in einer Halterung 42 gelagert. Die Halterung 42 ist beispielsweise an einer Karosserie oder einem Rahmen des Kraftfahrzeugs befestigt. Das erste Winkelgetriebe 34 und das zweite Winkelgetriebe 38 können beispielsweise als Kegelradgetriebe ausgebildet sein. Das erste Winkelgetriebe 34 und das zweite Winkelgetriebe 38 dienen zur Umlenkung der übertragenen Drehung und des übertragenen Drehmoments um 90°. Das erste Winkelgetriebe 34 und das zweite Winkelgetriebe 38 können beispielsweise an einer Karosserie oder einem Rahmen des Kraftfahrzeugs befestigt sein. Die dritte Lenk-Gelenkwelle 36 erstreckt sich zwischen einer Beifahrerseite und einer Fahrerseite des Kraftfahrzeugs. Die vierte Lenk-Gelenkwelle 40 ist antreibend und gelenkig mit dem Zwischengetriebe 16 verbunden.

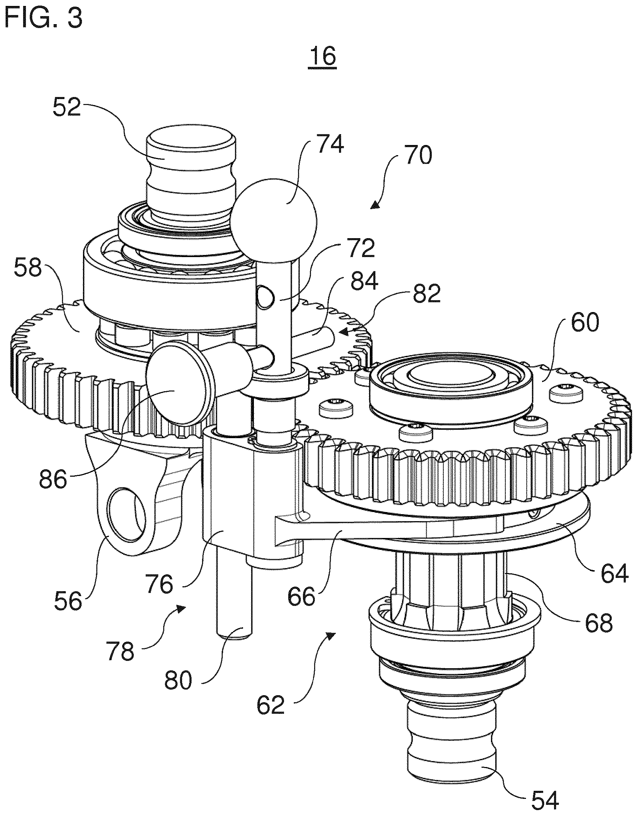

Das Zwischengetriebe 16 ist antreibend mit dem Lenkgetriebe 18 verbunden. Das Zwischengetriebe 16 verbindet den Lenkungsstrang 22 trieblich mit dem Lenkgetriebe 18. Zusätzlich kann das Zwischengetriebe 16 den Lenkungsstrang 26 trieblich mit dem Lenkgetriebe 18 verbinden, wie hierin im Detail insbesondere unter Bezugnahme auf Figur 3 beispielhaft beschrieben ist.

Das Lenkgetriebe 18 dient zum Wandeln einer Drehbewegung, die von dem Zwischengetriebe 16 eingeleitet wird, in einer ausgehende Schiebebewegung zum Lenken von Rädern des Kraftfahrzeugs. Das Lenkgetriebe 18 kann auf jegliche bekannte Art und Weise ausgebildet sein. Beispielsweise kann das Lenkgetriebe 18 als ein Kugelumlauflenkgetriebe ausgebildet sein. Es ist allerdings beispielsweise auch möglich, dass das Lenkgetriebe 18 als Zahnstangenlenkgetriebe, Schneckenlenkgetriebe oder Schraubenspindellenkgetriebe ausgebildet ist. Über eine Halterung 44 ist das Lenkgetriebe 18 beispielsweise an einem Rahmen oder einer Karosserie des Kraftfahrzeugs befestigt.

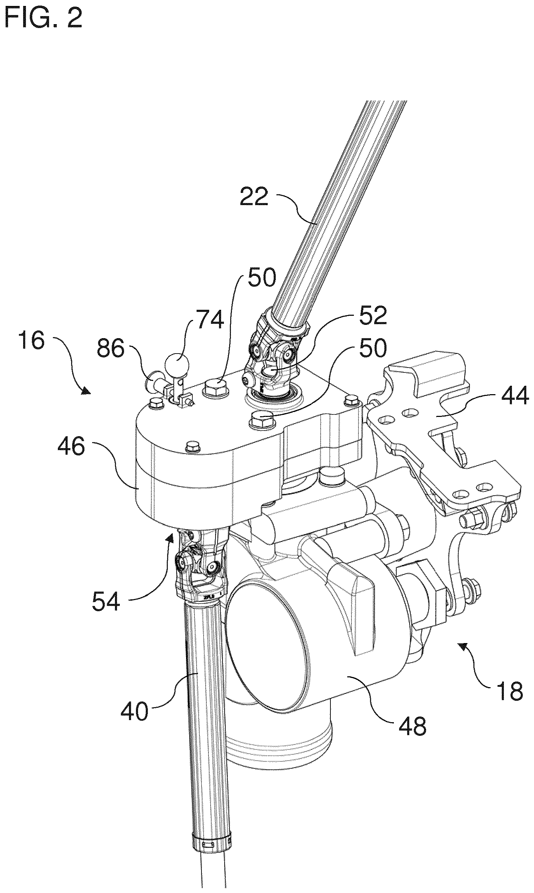

Nachfolgend ist das beispielhafte Zwischengetriebe 16 im Detail insbesondere unter Bezugnahme auf die Figuren 2 und 3 beschrieben. Die Figur 2 zeigt das Zwischengetriebe 16 und das Lenkgetriebe 18 von außen. Die Figur 3 zeigt das Zwischengetriebe 16 ohne Gehäuse.

Das Zwischengetriebe 16 weist ein eigenes Gehäuse 46 auf. Das Gehäuse 46 kann beispielsweise aus zwei aneinander befestigten Gehäuseabschnitten, zum Beispiel Gehäusehälften, gebildet sein. Das Gehäuse 46 ist ein geschlossenes Gehäuse und nach innen sowie nach außen abgedichtet. Damit kann kein Schmutz in das Gehäuse 46 gelangen und kein Schmiermittel, zum Beispiel Schmierfett, aus dem Gehäuse 46 austreten.

Das Gehäuse 46 ist direkt an einem Gehäuse 48 des Lenkgetriebes 18 befestigt. In dem dargestellten Ausführungsbeispiel ist das Gehäuse 46 über drei Schrauben 50 (nur zwei Schrauben in Figur 2 sichtbar) an dem Gehäuse 48 befestigt. Die Befestigung erfolgt in einer definierten Ausrichtung, sodass eine einfache Montage und ein sicherer Betrieb gewährleistet sind. Dadurch dass die Gehäuse 46 und 48 aneinander befestigt sind, kommt es zu keinen Relativbewegungen zwischen dem Zwischengetriebe 16 und dem Lenkgetriebe 18.

Die Lenk-Gelenkwelle des Lenkungsstrangs 22 ist gelenkig und antreibend mit einem Wellenstumpf einer ersten Antriebswelle 52 des Zwischengetriebes 16 verbunden. Die Lenk-Gelenkwelle 40 ist gelenkig und antreibend mit einem Wellenstumpf einer zweiten Antriebswelle 54 des Zwischengetriebes 16 verbunden. Die Lenk-Gelenkwelle des Lenkungsstrangs 22 und die Lenk-Gelenkwelle 40 sind an entgegengesetzten Seiten des Zwischengetriebes 16 trieblich mit der jeweiligen Antriebswelle 52 und 54 verbunden. Die Wellenachsen der Antriebswellen 52 und 54 verlaufen im Wesentlichen parallel zueinander. Die Antriebswellen 52 und 54 sind drehbar im Gehäuse 46 des Zwischengetriebes 16 gelagert. Die ersten Antriebswelle 52 ist als eine Durchgangswelle ausgeführt, die über ein Abtriebselement 56 antreibend mit dem Lenkgetriebe 18 verbunden ist.

Unter Bezugnahme auf Figur 3 ist dargestellt, dass das Zwischengetriebe 16 als einstufiges Stirnradgetriebe ausgebildet ist. Ein angetriebenes Zahnrad 58 ist drehfest auf der ersten Antriebswelle 52 angeordnet. Ein treibendes Zahnrad 60 ist drehfest auf der zweiten Antriebswelle 54 angeordnet. Die Übersetzung zwischen dem treibenden Zahnrad 60 und dem angetriebenen Zahnrad 58 ist 1.

Das Zwischengetriebe 16 weist einen Kopplungsmechanismus 62 auf. Der Kopplungsmechanismus 62 ermöglicht eine Kopplung und Entkopplung der zweiten Antriebswelle 54 und der ersten Antriebswelle 52. In der entkoppelten Stellung des Kopplungsmechanismus 62 ist das Kraftfahrzeug mittels der Hauptlenkeinrichtung 12 (siehe Figur 1) lenkbar. In der gekoppelten Stellung des Kopplungsmechanismus 62 ist das Kraftfahrzeug mittels der Hauptlenkeinrichtung 12 und der Zusatzlenkeinrichtung 14 (siehe Figur 1) lenkbar.

Im dargestellten Ausführungsbeispiel weist der Kopplungsmechanismus 62 eine Schiebemuffe 64 und eine Schaltgabel 66 auf. Die Schiebemuffe 64 ist drehfest und axial verschiebbar auf einem Keilwellenprofil 68 der zweiten Antriebswelle 54 angeordnet. Das treibende Zahnrad 60 ist drehfest mit der Schiebemuffe 64 verbunden. Beispielsweise können das treibende Zahnrad 60 und die Schiebemuffe 64 miteinander verschraubt sein. Mittels der Schaltgabel 66, die in eine Umfangsnut der Schiebemuffe 64 eingreift, kann die Schiebemuffe 64 auf dem Keilwellenprofil 68 zusammen mit dem treibenden Zahnrad 60 verschoben werden. Damit kann das treibende Zahnrad 60 wahlweise in Eingriff mit dem angetriebenen Zahnrad 58 und außer Eingriff von dem angetriebenen Zahnrad 58 verschoben werden. In Figur 3 sind das treibende Zahnrad 60 und das angetriebene Zahnrad 58 in Eingriff miteinander.

Neben der hier dargestellten Ausführungsform des Kopplungsmechanismus 62 mit der Schiebemuffe 64 kann der Kopplungsmechanismus auch anders aufgebaut sein. Beispielsweise kann der Kopplungsmechanismus eine Kupplung, wie eine Klauenkupplung, aufweisen, die eine Triebverbindung zwischen dem treibenden Zahnrad 60 und der zweiten Antriebswelle 54 bilden kann. Hierbei ist es beispielsweise möglich, dass das treibende Zahnrad 60 nicht verschoben werden muss, sondern ständig im Eingriff mit dem angetriebenen Zahnrad 58 ist.

Zum Betätigen des Kopplungsmechanismus 62 ist eine Betätigungseinrichtung 70 vorgesehen. Die Betätigungseinrichtung 70 weist eine Betätigungsstange 72, ein Griffstück 74 und ein Zwischenstück 76 auf. Die Betätigungsstange 72 ist mittels des Griffstücks 74 manuell verschiebbar. Das Griffstück 74 kann zum Verschieben der Betätigungsstange 72 beispielsweise bequem von einem Fahrersitz des Kraftfahrzeugs aus erreicht werden. Über das Zwischenstück 76 ist die Betätigungsstange 72 mit der Schaltgabel 66 verbunden, sodass eine Verschiebung der Betätigungsstange 72 eine Verschiebung der Schaltgabe 66 und somit eine Verschiebung der Schiebemuffe 72 und des treibenden Zahnrads 60 zur Folge hat. Beispielsweise kann ein Fahrer des Kraftfahrzeugs die Betätigungsstange 72 mittels des Griffstücks 74 nach oben ziehen, um den Kopplungsmechanismus 62 in die eingekoppelten Stellung zu verschieben.

Um ein Verkanten der Schaltgabel 66 während einer Verschiebebewegung zu verhindern, ist die Betätigungseinrichtung 70 und damit der Kopplungsmechanismus 62 an einer Führungseinrichtung 78 längsgeführt. Die Führungseinrichtung 78 weist eine Führungsstange 80 und ein Durchgangsloch in dem Zwischenstück 76 auf. Die Führungsstange 80 ist in dem Gehäuse 46 des Zwischengetriebes 16 befestigt. Insbesondere ist die Betätigungseinrichtung 70 mittels des Durchgangslochs des Zwischenstücks 76 entlang der Führungsstange 80 längs verschiebbar.

Das Zwischengetriebe 16 weist zudem eine Arretiereinrichtung 82 auf. Die Arretiereinrichtung 82 ermöglicht eine Arretierung des Kopplungsmechanismus 62 in der eingekoppelten Stellung und in der ausgekoppelten Stellung. Im Einzelnen kann ein Sicherungsstift (Sicherungsbolzen) 84 der Arretiereinrichtung 82 wahlweise in eines von zwei voneinander beabstandeten Durchgangslöchern in der Betätigungsstange 72 zum Arretieren der Betätigungsstange 72 eingeführt werden. In der arretierten Stellung kann die Betätigungseinrichtung 70 und somit der Kopplungsmechanismus 62 nicht verschoben werden. Beispielsweise kann der Sicherungsstift 84 mittels eines bequem vom Fahrersitz des Kraftfahrzeugs erreichbaren Griffstücks 86 gegriffen werden. Das Griffstück 86 ist an dem Sicherungsstift 84 befestigt.

Wie in Figur 2 gezeigt ist, sind die Griffstücke 74 und 86 außerhalb des Gehäuses 46 angeordnet und zugänglich.

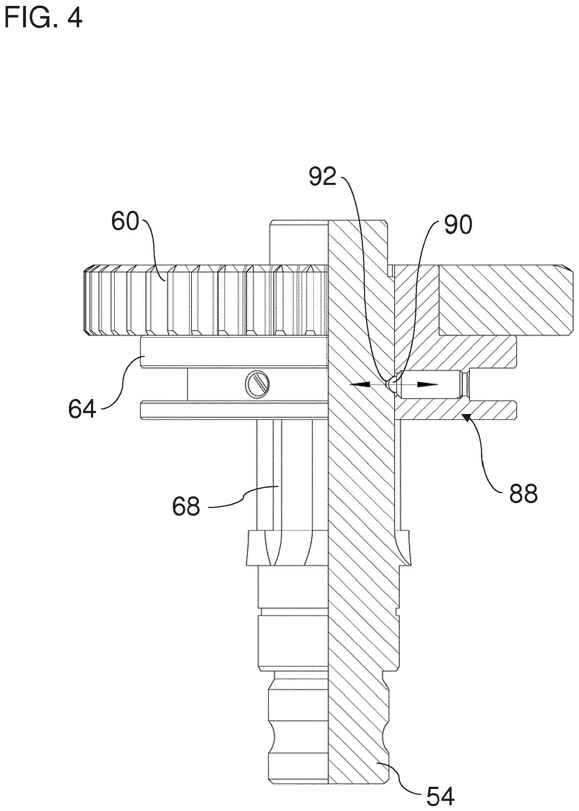

In Figur 4 ist eine Rasteinrichtung 88 gezeigt. Die Rasteinrichtung 88 ermöglicht, dass der Kopplungsmechanismus 62 in der eingekoppelten Stellung gehalten wird, sodass beim Lösen der Arretiereinrichtung 82 der Kopplungsmechanismus 62 sich nicht ohne gezielte Betätigung in die ausgekoppelte Stellung verschiebt. Stattdessen muss zur Überwindung der Rastwirkung der Rasteinrichtung 88 eine bestimmte Kraft mittels der Betätigungseinrichtung 70 aufgebracht werden, um den Kopplungsmechanismus 62 zu verschieben. Es ist beispielsweise auch möglich, dass eine alternative oder zusätzliche Rastvorrichtung vorgesehen ist, um den Kopplungsmechanismus 62 in der ausgekoppelten Stellung zu halten.

Im dargestellten Ausführungsbeispiel weist die Rasteinrichtung 88 mindestens einen federvorgespannten Rastkörper 90 auf, der verschiebbar in der Schiebemuffe 64 gelagert ist. Im Einzelnen ist der Rastkörper 90 in einer Richtung senkrecht zur Wellenachse der zweiten Antriebswelle 54 verschiebbar. In der eingekoppelten Stellung des Kopplungsmechanismus 62 greift der Rastkörper 90 in eine V-förmige Umfangsnut 92 des Keilwellenprofils 68 ein. Damit wird die Schiebemuffe 64 auf dem Keilwellenprofil 68 axial gesichert. Der Rastkörper 90 kann beispielsweise als eine Kugel ausgebildet sein oder zumindest einen Kugelkopf aufweisen. Unter Überwindung der Federvorspannung des Rastkörpers 90 kann die Schiebemuffe 64 in die ausgekoppelten Stellung des Kopplungsmechanismus 62 verschoben werden, wenn die Arretiereinrichtung 82 (siehe Figur 3) gelöst ist. Es ist beispielsweise auch möglich, dass der Rastkörper federvorgespannt in der zweiten Antriebswelle 54 verschiebbar ist und die Umfangsnut an einer Innenumfangsfläche der Schiebemuffe 64 angeordnet ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der ersten Antriebswelle, der zweiten Antriebswelle und/oder des Kopplungsmechanismus des unabhängigen Anspruchs 1 offenbart.

### Bezugszeichenliste

- 10: Vorrichtung zum Lenken
- 12: Hauptlenkeinrichtung
- 14: Zusatzlenkeinrichtung
- 16: Zwischengetriebe
- 18: Lenkgetriebe
- 20: Lenkrad
- 22: Lenkungsstrang
- 24: Lenkrad
- 26: Lenkungsstrang
- 28: Lenk-Gelenkwelle
- 30: Zwischenwelle
- 32: Lenk-Gelenkwelle
- 34: Winkelgetriebe
- 36: Lenk-Gelenkwelle
- 38: Winkelgetriebe
- 40: Lenk-Gelenkwelle
- 42: Halterung
- 44: Halterung
- 46: Gehäuse
- 48: Gehäuse
- 50: Schraube
- 52: Erste Antriebswelle
- 54: Zweite Antriebswelle
- 56: Abtriebselement
- 58: Angetriebenes Zahnrad
- 60: Treibendes Zahnrad
- 62: Kopplungsmechanismus
- 64: Schiebemuffe
- 66: Schaltgabel
- 68: Keilwellenprofil
- 70: Betätigungseinrichtung
- 72: Betätigungsstange
- 74: Griffstück
- 76: Zwischenstück
- 78: Führungseinrichtung
- 80: Führungsstange
- 82: Arretiereinrichtung
- 84: Sicherungsstift
- 86: Griffstück
- 88: Rasteinrichtung
- 90: Rastkörper
- 92: Umfangsnut

## Patentansprüche

1. Vorrichtung (10) zum Lenken eines Kraftfahrzeugs, insbesondere eines Nutzfahrzeugs, mit:
einer fahrerseitigen Hauptlenkeinrichtung (12);
einer beifahrerseitigen Zusatzlenkeinrichtung (14);
einem Zwischengetriebe (16) aufweisend:
- eine erste Antriebswelle (52), die trieblich mit einem Lenkungsstrang (22) der Hauptlenkeinrichtung (12) verbunden ist;
- eine zweite Antriebswelle (54), die trieblich mit einem Lenkungsstrang (26) der Zusatzlenkeinrichtung (14) verbunden ist;
- einen Kopplungsmechanismus (62), der zum wahlweisen Koppeln und Entkoppein der ersten Antriebswelle (52) und der zweiten Antriebswelle (54) ausgebildet ist; und
- ein Gehäuse (46), in dem die erste Antriebswelle (52) und die zweite Antriebswelle (54) drehbar aufgenommen sind; und
einer Führungseinrichtung (78), mittels der der Kopplungsmechanismus (62) geführt ist.

2. Vorrichtung (10) nach Anspruch 1, wobei:
das Gehäuse (46) ein abgedichtetes und/oder geschlossenes Gehäuse ist; und/oder
der Kopplungsmechanismus (62) in dem Gehäuse (46) aufgenommen ist.

3. Vorrichtung (10) nach Anspruch 1 oder Anspruch 2, wobei:
das Zwischengetriebe (16) als ein, insbesondere einstufiges, Stirnradgetriebe ausgebildet ist; und/oder
das Zwischengetriebe (16) eine Übersetzung von 1 aufweist; und/oder
die Zusatzlenkeinrichtung (14) und die Hauptlenkeinrichtung (12) an entgegengesetzten Seiten des Zwischengetriebes (16) trieblich mit dem Zwischengetriebe (16) verbindbar sind.

4. Vorrichtung (10) nach einem der vorherigen Ansprüche, wobei:
die erste Antriebswelle (52) drehfest mit einem angetriebenen Zahnrad (58) verbunden ist;
die zweite Antriebswelle (54) drehfest mit einem treibenden Zahnrad (60) verbunden ist; und
der Kopplungsmechanismus (62) zum wahlweisen Koppeln und Entkoppeln des treibenden Zahnrads (60) und des angetriebenen Zahnrads (58) ausgebildet ist.

5. Vorrichtung (10) nach einem der vorherigen Ansprüche, wobei:
der Kopplungsmechanismus (62) eine Schiebemuffe (64) oder eine Kupplung, insbesondere eine Klauenkupplung, aufweist.

6. Vorrichtung (10) nach Anspruch 5, wobei:
das treibende Zahnrad (60) mit der Schiebemuffe (64) verschiebbar ist, um in Eingriff mit und außer Eingriff von dem angetriebenen Zahnrad (58) zu gelangen.

7. Vorrichtung (10) nach Anspruch 5 oder Anspruch 6, wobei:
die Schiebemuffe (64) auf einem Keilwellenprofil (68) der zweiten Antriebswelle (54) verschiebbar ist; und/oder
die Schiebemuffe (64) mittels einer Schaltgabel (66) verschiebbar ist.

8. Vorrichtung (10) nach einem der vorherigen Ansprüche, wobei:
die Führungseinrichtung (78) eine Führungsstange (80) aufweist und/oder der Kopplungsmechanismus (62) mittels der Führungseinrichtung (78) längsgeführt ist.

9. Vorrichtung (10) nach einem der vorherigen Ansprüche, ferner aufweisend:
eine Arretiereinrichtung (82), insbesondere aufweisend einen Sicherungsstift (84), mittels der der Kopplungsmechanismus (72) in einer eingekoppelten Stellung und/oder einer ausgekoppelten Stellung arretierbar ist.

10. Vorrichtung (10) nach einem der vorherigen Ansprüche, ferner aufweisend:
eine Rasteinrichtung (88), insbesondere aufweisend einen in eine Umfangsnut (92) einrastbaren federvorgespannten Rastkörper (90), mittels der der Kopplungsmechanismus (62) in einer eingekoppelten Stellung und/oder einer ausgekoppelten Stellung einrastbar ist.

11. Vorrichtung (10) nach einem der vorherigen Ansprüche, ferner aufweisend:
eine Betätigungseinrichtung (70), insbesondere aufweisend eine Betätigungsstange (72), mittels der der Kopplungsmechanismus (62) manuell betätigbar ist.

12. Vorrichtung (10) nach Anspruch 11, ferner aufweisend:
ein Lenkgetriebe (18), insbesondere zum Wandeln einer eingehenden Drehbewegung in eine ausgehende Schiebebewegung, wobei das Zwischengetriebe (16) antreibend mit dem Lenkgetriebe (18) verbunden ist.

13. Vorrichtung (10) nach Anspruch 12, wobei:
das Gehäuse (46) des Zwischengetriebes (16) und ein Gehäuse (48) des Lenkgetriebes (18) lösbar und/oder in einer definierten Ausrichtung zueinander aneinander befestigt sind.

14. Kraftfahrzeug, insbesondere Nutzfahrzeug, mit einer Vorrichtung (10) nach einem der vorherigen Ansprüche.

## Claims

1. Device (10) for steering a motor vehicle, in particular a utility vehicle, with:
a driver-side main steering means (12);
a front passenger-side additional steering means (14) ;
an intermediate gear mechanism (16) comprising:
- a first drive shaft (52) which is drive-connected to a steering train (22) of the main steering means (12);
- a second drive shaft (54) which is drive-connected to a steering train (26) of the additional steering means (14);
- a coupling mechanism (62) which is configured to selectively couple and decouple the first drive shaft (52) and the second drive shaft (54); and
- a housing (46), in which the first drive shaft (52) and the second drive shaft (54) are received rotatably; and
a guide means (78), by means of which the coupling mechanism (62) is guided.

2. Device (10) according to Claim 1:
the housing (46) being a sealed and/or closed housing; and/or
the coupling mechanism (62) being received in the housing (46).

3. Device (10) according to Claim 1 or Claim 2:
the intermediate gear mechanism (16) being configured as an, in particular single-stage, spur gear mechanism; and/or
the intermediate gear mechanism (16) having a transmission ratio of 1; and/or
it being possible for the additional steering means (14) and the main steering means (12) to be drive-connected to the intermediate gear mechanism (16) on opposite sides of the intermediate gear mechanism (16).

4. Device (10) according to one of the preceding claims:
the first drive shaft (52) being connected fixedly to a driven gearwheel (58) for conjoint rotation;
the second drive shaft (54) being connected fixedly to a driving gearwheel (60) for conjoint rotation; and
the coupling mechanism (62) being configured to selectively couple and decouple the driving gearwheel (60) and the driven gearwheel (58).

5. Device (10) according to one of the preceding claims:
the coupling mechanism (62) comprising a slider sleeve (64) or a clutch, in particular a dog clutch.

6. Device (10) according to Claim 5:
it being possible for the driving gearwheel (60) to be displaced with the slider sleeve (64) in order to pass into engagement and out of engagement with the driven gearwheel (58).

7. Device (10) according to Claim 5 or Claim 6:
it being possible for the slider sleeve (64) to be displaced on a splined shaft profile (68) of the second drive shaft (54); and/or
it being possible for the slider sleeve (64) to be displaced by means of a selector fork (66).

8. Device (10) according to one of the preceding claims:
the guide means (78) having a guide rod (80), and/or the coupling mechanism (62) being guided longitudinally by means of the guide means (78).

9. Device (10) according to one of the preceding claims, comprising, furthermore:
a locking means (82), in particular comprising a securing pin (84), by means of which the coupling mechanism (72) can be locked in a coupled position and/or a decoupled position.

10. Device (10) according to one of the preceding claims, comprising, furthermore:
a latching means (88), in particular comprising a spring-prestressed latching body (90) which can be latched into a peripheral groove (92) and by means of which the coupling mechanism (62) can be latched in a coupled position and/or a decoupled position.

11. Device (10) according to one of the preceding claims, comprising, furthermore:
an actuating means (70), in particular comprising an actuating rod (72), by means of which the coupling mechanism (62) can be actuated manually.

12. Device (10) according to Claim 11, comprising, furthermore:
a steering gear (18), in particular for converting an incoming rotational movement into an outgoing sliding movement, the intermediate gear mechanism (16) being drive-connected to the steering gear (18).

13. Device (10) according to Claim 12:
the housing (46) of the intermediate gear mechanism (16) and a housing (48) of the steering gear (18) being fastened to one another releasably and/or in a defined orientation with respect to one another.

14. Motor vehicle, in particular utility vehicle, with a device (10) according to one of the preceding claims.

## Revendications

1. Dispositif (10) de direction d'un véhicule automobile, notamment d'un véhicule utilitaire, comprenant :
un appareil de direction principal côté conducteur (12) ;
un appareil de direction supplémentaire côté passager (14) ;
un engrenage intermédiaire (16) présentant :
- un premier arbre d'entraînement (52), qui est relié en entraînement à un brin de direction (22) de l'appareil de direction principal (12) ;
- un deuxième arbre d'entraînement (54), qui est relié en entraînement à un brin de direction (26) de l'appareil de direction supplémentaire (14) ;
- un mécanisme d'accouplement (62), qui est configuré pour accoupler et désaccoupler sélectivement le premier arbre d'entraînement (52) et le deuxième arbre d'entraînement (54) ; et
- un boîtier (46), dans lequel le premier arbre d'entraînement (52) et le deuxième arbre d'entraînement (54) sont reçus de manière rotative ; et
un appareil de guidage (78), au moyen duquel le mécanisme d'accouplement (62) est guidé.

2. Dispositif (10) selon la revendication 1, dans lequel :
le boîtier (46) est un boîtier étanchéifié et/ou fermé ; et/ou
le mécanisme d'accouplement (62) est reçu dans le boîtier (46) .

3. Dispositif (10) selon la revendication 1 ou la revendication 2, dans lequel :
l'engrenage intermédiaire (16) est configuré sous la forme d'un engrenage droit, notamment à un étage ; et/ou l'engrenage intermédiaire (16) présente un rapport de transmission de 1 ; et/ou
l'appareil de direction supplémentaire (14) et l'appareil de direction principal (12) peuvent être reliés en entraînement à l'engrenage intermédiaire (16) sur des côtés opposés de l'engrenage intermédiaire (16).

4. Dispositif (10) selon l'une quelconque des revendications précédentes, dans lequel :
le premier arbre d'entraînement (52) est relié de manière immobile en rotation à une roue dentée menée (58) ;
le deuxième arbre d'entraînement (54) est relié de manière immobile en rotation à une roue dentée menante (60) ; et
le mécanisme d'accouplement (62) est configuré pour accoupler et désaccoupler sélectivement la roue dentée menante (60) et la roue dentée menée (58).

5. Dispositif (10) selon l'une quelconque des revendications précédentes, dans lequel :
le mécanisme d'accouplement (62) présente un manchon coulissant (64) ou un embrayage, notamment un embrayage à crabots.

6. Dispositif (10) selon la revendication 5, dans lequel :
la roue dentée menante (60) peut coulisser avec le manchon coulissant (64) pour venir en prise avec la roue dentée menée (58) et s'en dégager.

7. Dispositif (10) selon la revendication 5 ou la revendication 6, dans lequel :
le manchon coulissant (64) peut coulisser sur un profil cannelé (68) du deuxième arbre d'entraînement (54) ; et/ou
le manchon coulissant (64) peut coulisser au moyen d'une fourchette de commutation (66).

8. Dispositif (10) selon l'une quelconque des revendications précédentes, dans lequel :
l'appareil de guidage (78) présente une tige de guidage (80) et/ou le mécanisme d'accouplement (62) est guidé longitudinalement au moyen de l'appareil de guidage (78).

9. Dispositif (10) selon l'une quelconque des revendications précédentes, présentant en outre :
un appareil de blocage (82), présentant notamment une goupille de sécurité (84), au moyen duquel le mécanisme d'accouplement (72) peut être bloqué dans une position accouplée et/ou une position désaccouplée.

10. Dispositif (10) selon l'une quelconque des revendications précédentes, présentant en outre :
un appareil d'encliquetage (88), présentant notamment un corps d'encliquetage (90) précontraint par ressort, pouvant être encliqueté dans une rainure périphérique (92), au moyen duquel le mécanisme d'accouplement (62) peut être encliqueté dans une position accouplée et/ou une position désaccouplée.

11. Dispositif (10) selon l'une quelconque des revendications précédentes, présentant en outre :
un appareil d'actionnement (70), présentant notamment une tige d'actionnement (72), au moyen duquel le mécanisme d'accouplement (62) peut être actionné manuellement.

12. Dispositif (10) selon la revendication 11, présentant en outre :
un mécanisme de direction (18), notamment pour convertir un mouvement de rotation entrant en un mouvement de coulissement sortant, l'engrenage intermédiaire (16) étant relié en entraînement au mécanisme de direction (18) .

13. Dispositif (10) selon la revendication 12, dans lequel :
le boîtier (46) de l'engrenage intermédiaire (16) et un boîtier (48) du mécanisme de direction (18) sont fixés l'un à l'autre de manière amovible et/ou selon une orientation définie l'un par rapport à l'autre.

14. Véhicule automobile, notamment véhicule utilitaire, comprenant un dispositif (10) selon l'une quelconque des revendications précédentes.
